# EUROPÄISCHE PATENTSCHRIFT

(11) **EP 0 994 789 B1**
(45) Veröffentlichungstag und Bekanntmachung des Hinweises auf die Patenterteilung: **10.12.2003**
(21) Anmeldenummer: 99913235.0
(22) Anmeldetag: 06.03.1999
(51) Int. Cl.: B60N 2/28

(54) **BEFESTIGUNGSVORRICHTUNG FÜR EINEN KINDERSITZ AUF EINEM FAHRZEUGSITZ**
DEVICE FOR FIXING A CHILD SEAT TO THE SEAT OF A MOTOR VEHICLE
DISPOSITIF DE FIXATION D'UN SIEGE ENFANT SUR UN SIEGE DE VEHICULE

(30) Priorität: 16.05.1998 DE 19822134
(43) Veröffentlichungstag der Anmeldung: 26.04.2000
(73) Patentinhaber: KEIPER GmbH & Co. KG, 67657 Kaiserslautern (DE)
(72) Erfinder: GOY, Reinhard, D-67657 Kaiserslautern (DE); LEBKÜCHER, Michael, D-67678 Mehlingen/Baalborn (DE); LIEDHEGENER, Ralf, D-67705 Trippstadt (DE); REIMER, Peter, D-67229 Gro karlbach (DE)
(74) Vertreter: Mentzel, Norbert, Dipl.-Phys.
(86) Internationale Anmeldenummer: EP9901454
(87) Internationale Veröffentlichungsnummer: WO99059837

(56) Entgegenhaltungen:
- EP-A- 0 417 394
- DE-C- 4 427 768
- DE-C- 19 650 087

## Beschreibung

Die Erfindung betrifft eine Befestigungsvorrichtung für einen Kindersitz auf einem Fahrzeugsitz mit wenigstens einem am Fahrzeugsitz festgelegten Halteelement, welches ein in eine Gebrauchsstellung einerseits und in eine Nichtgebrauchsstellung bzw. Parkstellung andererseits überführbares Befestigungselement haltert.

Üblicherweise hat man den Kindersitz auf einem Fahrzeugsitz mittels des vorhandenen Sicherheitsgurtes befestigt. Diese Befestigungsart ist jedoch im Crashverhalten unbefriedigend. Denn während eines Aufpralles erfolgt eine Abbremsung durch Energieaufnahme der sich verformenden Knautschzonen des Fahrzeuges, während die Insassen erst dann abgebremst werden, wenn der Sicherheitsgurt nicht weiter nachgibt. Ist nun der Gurt des Fahrzeugsitzes durch den Kindersitz belastet, gibt überdies noch zusätzlich der Gurt des Kindersitzes nach, so dass ein im Kindersitz befindliches Kind später als ein Erwachsener abgebremst wird, und somit in einen Abbremsbereich gelangt, bei dem bereits die Knautschzone kaum noch Energie aufnimmt, so dass das Kind die restliche Belastung des Abbremsvorganges bis zum Stillstand ertragen muss. Es wurde daher bereits vorgeschlagen, am Fahrzeugsitz zwei Befestigungselemente in Form von Bügeln an der Fahrzeugstruktur bzw. am Sitz ortsfest anzuordnen. Diese ortsfesten Bügel stören aber dann, wenn ein Kindersitz auf den Fahrzeugsitz nicht aufgesattelt ist, sondern vielmehr dieser Fahrzeugsitz von einem erwachsenen Fahrgast benutzt wird.

Man hat daher bereits vorgeschlagen, das in Form von Bügeln ausgebildete Befestigungselement in eine Parkstellung (Nichtgebrauchslage) zu schwenken, wobei diese Befestigungselemente den Sitzlängsseiten benachbart und im hinteren Bereich des Sitzes zwischen der Rückenlehne und dem Sitzpolster angeordnet sind. Die Befestigungselemente werden zum Zwecke der Befestigung des Kindersitzes aus dem Spalt zwischen Sitzpolster und Rückenlehne derart ausgeschwenkt, dass sie über das Sitzpolster für die Befestigung des Kindersitzes in Gebrauchsstellung vorragen. In der Parkstellung wird das zurückgeschwenkte und im Spalt zwischen Rückenlehne und Sitz befindliche Befestigungselement durch eine Sperrklinke verriegelt, die jedoch an unzugänglicher Stelle plaziert ist, so dass diese vom Sitzbenutzer nur über einen Bowdenzug und einen damit gekuppelten Auslösehebel zu handhaben ist. Eine vergleichbare Befestigungsvorrichtung ist aus der DE 196 50 087 C1 bekannt.

Aufgabe der Erfindung ist es, eine Befestigungsvorrichtung der vorgenannten Art dahingehend zu verbessern, dass diese vom Sitzbenutzer auf einfache Weise ohne Zwischenschaltung von zuvor auszulösenden Riegelelementen betätigt werden kann. Diese Aufgabe ist mit den im Kennzeichen des Patentanspruchs 1 genannten Merkmalen gelöst. Das Halteelement lässt sich auf einfache Weise an der Tragkonstruktion des Sitzes oder der Karosserie festlegen, wobei zweckmäßigerweise im Bereich jeder Sitzlängsseite ein Halteelement plaziert ist. Das mit dem jeweiligen Halteelement wirkverbundene Befestigungselement kann infolge der zwischen das Befestigungselement und dem Halteelement plazierten Rastmechanik auf einfache Weise durch jeweiliges Niederdrücken einerseits in die Parkstellung und andererseits in die Gebrauchsstellung überführt werden, zusätzliche Bedieneinheiten für die Herstellung beider Stellungen des Befestigungselementes können daher vollständig entfallen.

Bei einer bevorzugten Ausführungsform des Erfindungsgegenstandes ist die Rastmechanik zwischen Befestigungselement und Halteelement als Zwei-Stufen-Mechanik ausgebildet, durch deren erste Raststufe das Befestigungselement in die Parkstellung und durch deren zweite Raststufe das Befestigungselement in die Gebrauchsstellung überführbar ist. Dabei mag das aus einem in Richtung auf die Gebrauchsstellung durch einen Kraftspeicher belasteten Grundkörper mit einem daran festgelegten Bügel bestehende Befestigungselement mit einer Steuernase linear verschiebbar in eine Steuerkulisse des quer zum Befestigungselement verschiebbar am Fahrzeugsitz gehalterten Halteelementes eingreifen.

Die vom Grundkörper des Befestigungselementes abragende Steuernase weist vorteilhaft einen Querschnitt in Form eines gleichschenkligen Dreiecks auf, dessen die Schenkel verbindende Seite in der linearen Bewegungsrichtung des Befestigungselementes verläuft. Dabei ist die die Steuernase aufnehmende Steuerkulisse vorteilhaft aus einer solchen Führungsbahn gebildet, deren äußere Steuerflächen und auch die durch einen Winkelvorsprung gebildeten inneren Steuerflächen abwechselnd einerseits in Bewegungsrichtung der Steuernase linear und andererseits im Sinne der Schenkel der Steuernase geneigt verlaufen.

Um das Befestigungselement mit seinem Bügel in der ersten, durch das Versenken des Bügels innerhalb des Sitzteiles gekennzeichneten Raststellung einerseits zu sichern und andererseits mit Sicherheit auch in die durch das Ausragen des Bügels aus dem Sitzteil gekennzeichnete zweite Raststellung zu überführen, übergreift die den Raststufen zugekehrte Steuerfläche des Winkelvorsprunges beide gleichsinnig geneigten Steuerflächen der Raststufen bereichsweise, ist jedoch gegensinnig zu den Steuerflächen der Raststufen geneigt und durch eine in Bewegungsrichtung der Steuernase lineare Steuerfläche in Ausrichtung auf die geneigte Steuerfläche der zweiten Raststufe begrenzt. Die der zweiten Raststellung entsprechende, über die Sitzoberkante ausgefahrene Position des Bügels am Befestigungselement wird durch einen oberen Anschlag im Weg der Steuernase des Befestigungselementes begrenzt, wobei der Anschlag durch Verbinden mit dem Halteelement an diesem ortsfest verbleibt. Um eine hemmungsfreie Bewegung der Steuernase in der Steuerkulisse zu gewährleisten, ist der Abstand zwischen den äußeren und inneren Steuerflächen der Steuerkulisse für den Durchgang der Steuernase bemessen.

Bei einer weiteren Ausführungsform des Erfindungsgegenstandes wird eine Rastmechanik eingesetzt, die es erlaubt, das Befestigungselement mit seinem Bügel am Halteelement in einer senkrecht zur Sitzfläche verlaufenden Ebene schwenkbar zu lagern, wobei infolge der Rastmechanik das Befestigungselement bzw. der Bügel in eine aufragende Gebrauchslage oder in eine an die Sitzfläche anklappbare Parklage überführt werden kann. Um eine Störung des Sitzbenutzers während des Nichtgebrauchs des Befestigungselementes auszuschließen, weist die Sitzfläche eine Ausnehmung zur Aufnahme eines Bügels des Befestigungselementes während dessen Parklage auf.

Die Erfindung ist mit Ausführungsbeispielen auf der Zeichnung dargestellt und wird nachfolgend näher erläutert. Es zeigen:
- Fig. 1: den rückwärtigen Sitzbereich zwischen Rückenlehne und Sitzteil in einer schematischen Seitenansicht, bei der das am Sitzteil festgelegte Halteelement das Befestigungselement in einer eingeschobenen Lage haltert,
- Fig. 2: die als Zwei-Stufen-Mechanik ausgebildete Rastmechanik, mit welcher das durch einen als Schraubendruckfeder ausgebildeter Kraftspeicher beaufschlagte Befestigungs-element an dem Halteelement in zwei Raststufen festlegbar ist, wobei die vorgenannten Bauteile in perspektivischer Darstellung gezeigt sind,
- Fig. 3: das Befestigungselement und das Halteelement in einer voneinander getrennten Darstellung in perspektivischer, spiegelbildlich zu Fig. 2 dargestellten Ansicht mit einer zum Halteelement explosionsartig angeordneten Anschlagplatte,
- Fig. 4A-4H: das Halteelement mit seiner Steuerkulisse in einem Querschnitt und mit in die Steuerkulisse eingreifender Steuernase in acht Stellungen, während des Durchlaufs der Steuernase durch die Steuerkulisse, wobei in Fig. 4A der Durchlaufweg der Steuernase strichpunktiert eingezeichnet ist,
- Fig. 5: ein weiteres Ausführungsbeispiel des Erfindungsgegenstandes, bei dem das im hinteren Sitzbereich angeordnete Befestigungselement gegenüber dem Halteelement in einer senkrecht zur Oberfläche des Sitzteiles verlaufenden Ebene schwenkbar ist.

Zunächst wird darauf hingewiesen, dass die dargestellte und nachfolgend näher beschriebene Befestigungsvorrichtung für einen Kindersitz jeweils ein Ausführungsbeispiel des Erfindungsgegenstandes darstellt, der auch abweichend von der dargestellten Ausführungsform gestaltet sein kann, wie dies oben bereits angedeutet wurde. Insbesondere kann der aus einem Sitzteil und einer Rückenlehne gebildete Sitz in bekannter Weise gestaltet sein, wobei auch die den Sitzteil mit der Rückenlehne verbindenden Beschläge zur Einstellung der Neigungslage der Rückenlehne in bekannter Weise gefertigt sein können. Außerdem ist die Befestigungsvorrichtung für einen Kindersitz nicht nur auf die Verwendung an einem Beifahrersitz bzw. an Fondsitzen eines Kraftfahrzeuges beschränkt, sondern die Befestigungsvorrichtung lässt sich auch bei zum Personentransport geeigneten Sitzen in anderen Verkehrsmitteln wie Bus, Bahn und Flugzeugen allgemein verwenden. Die Ausführungsformen von Befestigungsvorrichtungen sind auf den Zeichnungen jedoch am Beispiel eines Beifahrersitzes für Kraftfahrzeuge erläutert.

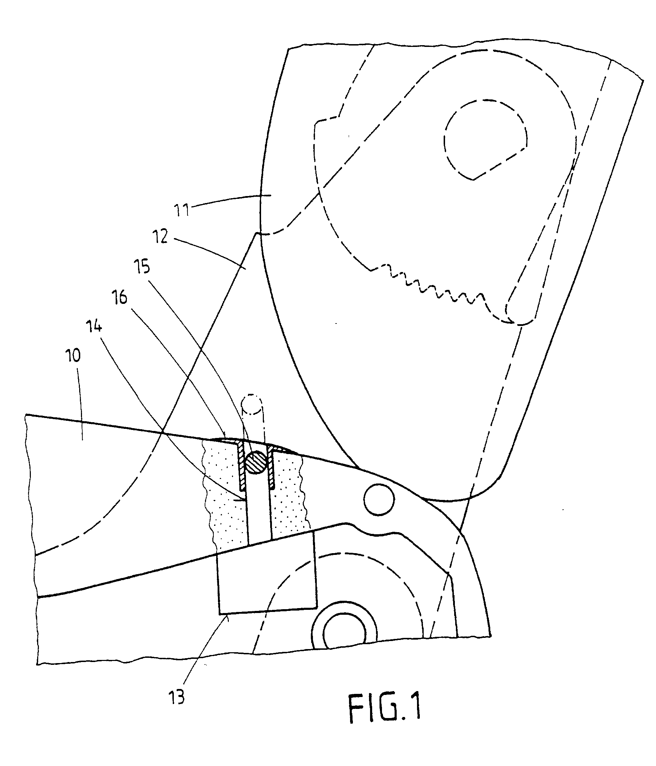

Im hinteren Bereich des Sitzteiles 10 und z.B. mittels eines Gelenkbeschlages 12 einer Rückenlehne 11, die neigungseinstellbar sein kann. ist am Sitzteil 10 in der Regel im Bereich beider Sitzlängsseiten jeweils ein Halteelement 13 angeordnet. Das Halteelement könnte auch an der Rückenlehne oder an der Karosserie angebracht sein. Bei dem aus den Fig. 1 bis 4H ersichtlichen Ausführungsbeispiel ist dieses Halteelement 13 in horizontaler Lage verschiebbar, jedoch in vertikaler Lage ortsfest am Sitzteil 10 gehaltert. Das Befestigungselement 14 für den Kindersitz ist mit dem Halteelement 13 wirkverbunden und zwar in vertikaler Lage verschiebbar, jedoch in horizontaler Lage fixiert im Sitzteil 10 geführt. Dabei kann das Befestigungselement 14 mit einem Bügel 15 über die Oberfläche des Sitzteiles 10 hinausragen, wobei der Spalt in der Polsterung des Sitzteiles 10 zur Aufnahme des Bügels 15 durch eine Bügelblende 16 abgedeckt ist.

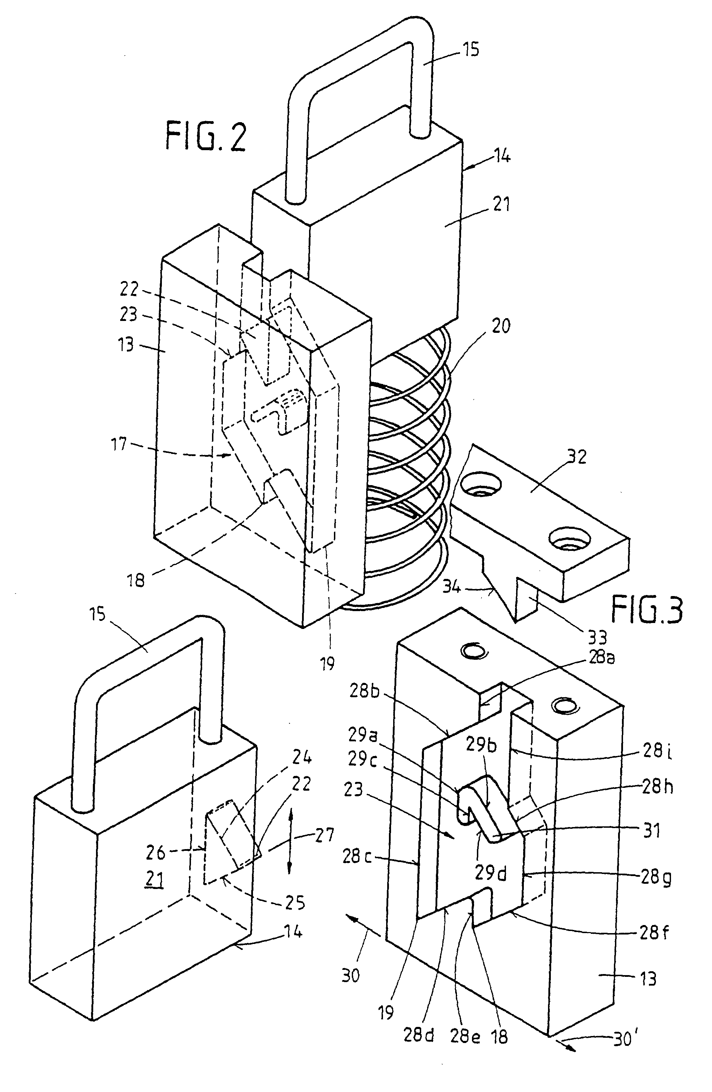

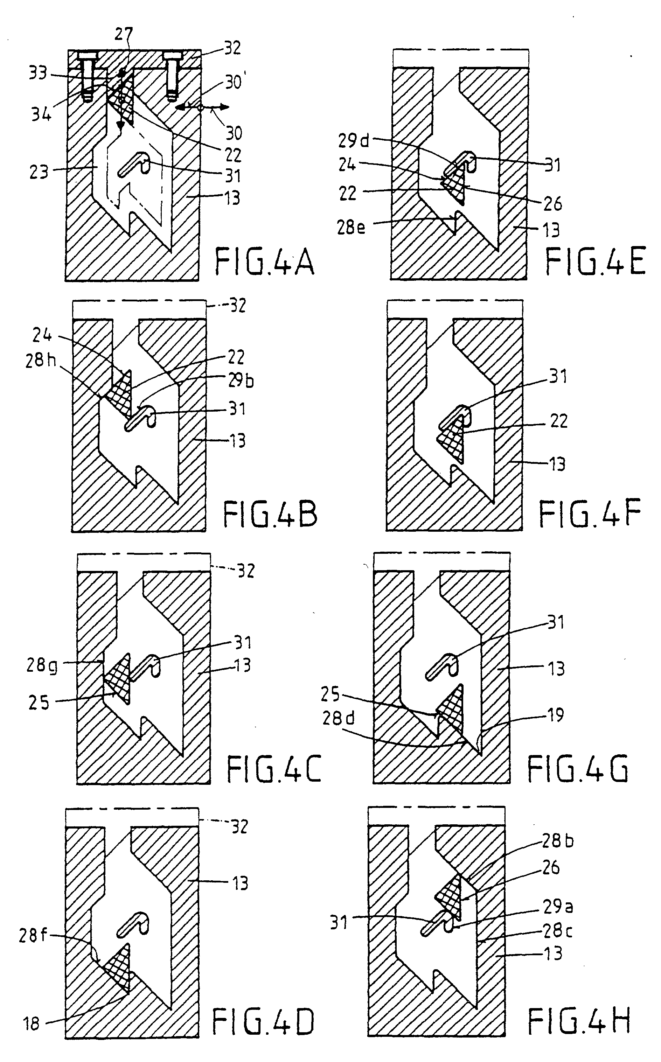

In Fig. 2 ist die Wirkverbindung zwischen dem Halteelement 13 und dem Befestigungselement 14 dargestellt. Diese Wirkverbindung erfolgt über eine Rastmechanik 17, die als Zwei-Stufen-Mechanik ausgebildet ist, deren erste Raststufe 18 in Verbindung mit der das Befestigungselement 14 in Ausschubrichtung belastenden und einen Kraftspeicher 20 bildenden Druckfeder für die Umsteuerung des Befestigungselementes 14 in die aus Fig. 1 ersichtliche Parkstellung sorgt, während über die zweite Raststufe 19 die Umsteuerung des Befestigungselementes mit dessen Bügel 15 in die aus Fig. 2 ersichtliche Gebrauchsstellung mit Hilfe des Kraftspeichers 20 ermöglicht wird. Die Rastmechanik 17 besteht - wie insbesondere auch der Fig. 3 zu entnehmen ist - aus einer vom Grundkörper 21 des Befestigungselementes 14 abragenden Steuernase 22, die in eine im Halteelement 13 befindliche Steuerkulisse 23 eingreift. Dabei weist die vom Grundkörper 21 abragende Steuernase 22 einen Querschnitt in Form eines gleichschenkligen Dreiecks auf, dessen die Schenkel 24. und 25 verbindende Dreiecksseite 26 in der durch den Doppelpfeil 27 in Fig. 3 und 4A angedeuteten linearen Bewegungsrichtung des Befestigungselementes 14 verläuft. Die Steuerkulisse 23 des im Sinne der Pfeile 30 und 30' horizontal verschiebbaren Halteelementes 13 weist eine Führungsbahn auf, die aus äußeren Steuerflächen 28a bis 28i und durch innere Steuerflächen 29a bis 29d begrenzt wird. Dabei sind die inneren Steuerflächen 29a bis 29d Bestandteil eines im Inneren der Steuerkulisse 23 vorragenden Winkelvorsprungs 31. Die äußeren Steuerflächen 28a, 28c, 28e, 28g und 28i verlaufen sämtlich linear und parallel zur Dreiecksseite 26 der Steuernase 22. Die äußeren Steuerflächen 28b, 28d und 28f verlaufen geneigt und zwar parallel zum Schenkel 25 der Steuernase 22. Die die Führungsbahn am Winkelvorsprung 31 innenseitig begrenzenden Steuerflächen 29a und 29c verlaufen ebenfalls linear und parallel zu der Dreiecksseite 26 der Steuernase 22. Die inneren Steuerflächen 29b und 29d am Winkelvorsprung 31 verlaufen geneigt und zwar parallel zum Schenkel 24 der Steuernase 22. Schließlich ist aus Fig. 3 noch zu entnehmen, dass die nach oben offene Führungsbahn im Halteelement 13 durch eine mit dem Halteelement 13 beispielsweise durch Schrauben fest verbindbare Anschlagplatte 32 verschließbar ist. Diese Anschlagplatte 32 weist einen in die Führungsbahn zwischen die Steuerflächen 28a und 28i fassenden Vorsprung 33 auf, dessen Unterseite 34 parallel zum Schenkel 24 der Steuernase 22 geneigt verläuft und somit eine Hubbegrenzung für das in Gebrauchsstellung überführte Befestigungselement 14 bildet.

Der Winkelvorsprung 31 im Inneren der Steuerkulisse 23 ist derart angeordnet, dass bei Überführung aus der in Gebrauchsstellung befindlichen Lage des Befestigungselementes 14 in eine die Parkstellung charakterisierende Lage des Befestigungselementes die untere Spitze der Steuernase 22 zuerst auf der Steuerfläche 29b des Winkelvorsprungs 31 auftrifft und unter gleichzeitiger Querverschiebung des Halteelementes 13 im Sinne des Pfeiles 30 weiter nach unten gleitet. Der Durchlauf der Steuernase 22 in der Führungsbahn der Steuerkulisse 23 lässt sich am besten an Hand der strichpunktierten Linie in Fig. 4A bis 4H verfolgen, in denen das Halteelement 13 in einem Vertikalschnitt dargestellt ist, in dessen Steuerkulisse 23 die Steuernase 22 des Befestigungselementes 14 eingreift. Bei der aus Fig. 4A ersichtlichen Darstellung befindet sich die Steuernase 22 in ihrer oberen Stellung, was der in strichpunktierten Linien in Fig. 1 dargestellten Lage des Bügels 15 am Befestigungselement 14 entspricht. In dieser Lage ist das durch den Druckspeicher 20 beaufschlagte Befestigungselement 14 mit dem Schenkel 24 der Steuernase 22 in Anlage an der Unterseite 34 des Vorsprungs 33 der mit dem Halteelement 13 fest verbundenen Anschlagplatte 32. Wenn nun der Bügel 15 aus seiner in Fig. 1 strichpunktierten Lage gegen die Kraft des Druckspeichers 20 niedergedrückt wird, so trifft die untere Spitze der Steuernase 22 zunächst auf die parallel zum Schenkel 24 geneigte Steuerfläche 29b des Winkelvorsprungs 31 und beginnt das Halteelement 13 im Sinne des Pfeiles 30 nach rechts zu verschieben. Bei weiterem Niederdrücken des Bügels 15 gelangt auch die Steuernase 22 weiter nach unten, wobei gleichzeitig das Halteelement 13 weiter im Sinne des Pfeiles 30 nach rechts verschoben wird, bis die untere Ecke der Steuernase 22 die Steuerfläche 29b verlässt. Dabei passiert die Steuernase 22 den Freiraum zwischen dem Winkelvorsprung 31 und der parallel zur Dreiecksseite 26 linear verlaufenden Steuerfläche 28g. Diese Lage ist aus Fig. 4C ersichtlich. Schließlich trifft der Schenkel 25 der Steuernase 22 auf der in gleicher Weise geneigten Steuerkurve 28f auf, und gleitet an dieser in die aus Fig. 4D ersichtliche Stellung, bei der die untere Spitze der Steuernase 22 die erste Raststufe 18 erreicht, wobei sich das Halteelement 13 wieder etwas im Sinne des Pfeiles 3 0' nach links zurückbewegt hat. In dieser Lage lässt sich der Bügel 15 und damit auch die Steuernase 22 nicht weiter nach unten drücken, so dass die Bedienungsperson den Bügel 15 loslässt. Sobald die Federkraft des Kraftspeichers 20 nicht mehr überwunden wird, drückt dieser das Befestigungselement 14 wieder etwas nach oben und zwar soweit, bis nach Passieren der Steuerfläche 28e durch die Dreiecksseite 26 und Aufwärtsgleiten des Schenkels 24 an der Steuerfläche 29d unter Überwindung der in Fig. 4E gezeigten Darstellung schließlich die aus Fig. 4F ersichtliche Rastlage der Steuernase 22 am Winkelvorsprung 31 erzielt ist. In dieser aus Fig. 4F ersichtlichen Lage befindet sich der Grundkörper 21 mit dem Bügel 15 des Befestigungselementes 14 in seiner Parkstellung unterhalb der Oberfläche des Sitzteiles 10, wie dies aus Fig. 1 ersichtlich ist.

Wenn nun das Befestigungselement 14 wieder aus seiner Parkstellung in die Gebrauchsstellung überführt werden soll, so ist dieser Bügel 15 entgegen der Kraft des Druckspeichers 20 erneut nach unten zu drücken. Dabei trifft der Schenkel 25 der Steuernase 22 auf die Steuerfläche 28d der Steuerkulisse 23 und gleitet unter weiterer Verschiebung des Halteelementes 13 in Richtung des Pfeiles 30' und verlässt den Winkelvorsprung 31 vollständig. Diese Lage ist in Fig. 4G dargestellt. Infolge weiteren linearen Verschiebens der Steuernase 22 nach unten gelangt diese mit ihrer unteren Spitze bei Verschiebung des Halteelementes 13 nach links schließlich in die zweite Raststufe 19, so dass ein weiteres Niederdrücken des Bügels 15 und damit auch der Steuernase 22 gegen die Kraft des Druckspeichers 20 nach unten nicht mehr möglich ist. Lässt nun die Bedienungsperson den Bügel 15 los, so drückt der Druckspeicher 20 über den Grundkörper 21 auch die Steuernase 22 nach oben, die dann mit ihrer Dreiecksseite 26 an der Steuerfläche 28c nach oben entlanggleitet und den Durchlass zwischen der Steuerfläche 29a des Winkelvorsprunges 31 und der Steuerfläche 28c der Steuerkulisse 23 passiert und beginnt zwischen dem Winkelvorsprung 31 und der Steuerfläche 28b unter gleichzeitiger Verschiebung des Halteelementes 13 im Sinne des Pfeiles 30 hindurchzugleiten. Diese Lage ist in Fig. 4H dargestellt. Der Kraftspeicher 20 veranlasst jedoch eine weitere lineare Verschiebung der Steuernase 22 nach oben, wobei auch das Halteelement 13 weiter im Sinne des Pfeiles 30 nach rechts verschoben wird, bis schließlich die aus Fig. 4A ersichtliche Lage von der Steuernase 22 wieder erreicht ist und diese an der Unterseite 34 des Vorsprunges 33 der Anschlagplatte 32 anliegt. In dieser Lage ist dann wieder die Gebrauchsstellung des Bügels 15 vorhanden.

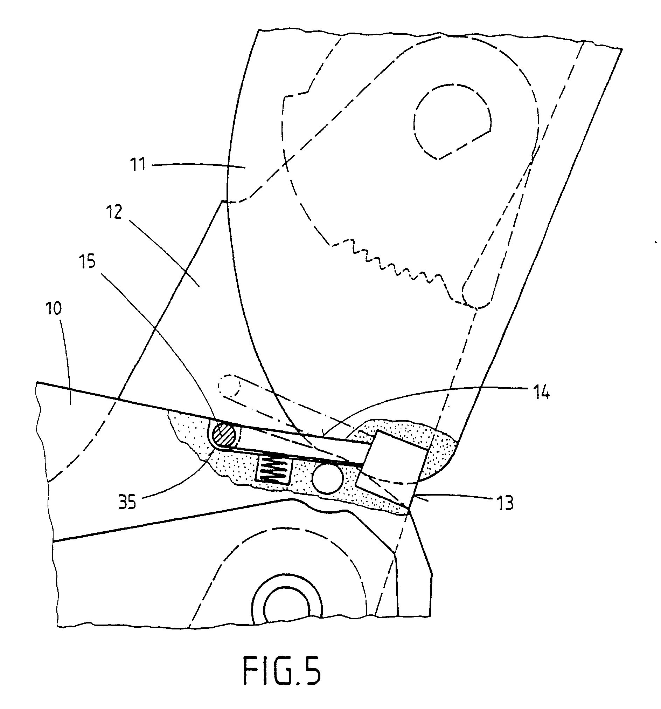

Bei dem aus Fig. 5 ersichtlichen Ausführungsbeispiel ist das ebenfalls einen Bügel 15 aufweisende Befestigungselement 14 mit dem Halteelement 13 über eine nicht dargestellte Rastmechanik verbunden. Diese Rastmechanik ist jedoch derart konzipiert, dass das Befestigungselement in einer senkrecht zur Sitzfläche verlaufenden Ebene schwenkbar ist und durch die zuvor erwähnte Rastmechanik in eine aufragende Gebrauchslage oder in eine an die Oberseite des Sitzteiles 10 anklappbare Parklage überführbar ist. In Fig. 5 ist die Parklage in ausgezogenen Linien dargestellt, während die Gebrauchslage des Befestigungselementes 14 in strichpunktierten Linien dargestellt ist. Wie weiterhin der Fig. 5 entnommen werden kann, befindet sich an der Oberfläche des Sitzteiles 10 vorteilhaft in dessen Polsterung eine Ausnehmung 35, in welcher der Bügel 15 des Befestigungselementes 14 einschwenkbar ist.

### Bezugszeichenliste:

- 10: Sitzteil
- 11: Rückenlehne
- 12: Gelenkbeschlag
- 13: Halteelement
- 14: Befestigungselement
- 15: Bügel
- 16: Bügelblende
- 17: Rastmechanik
- 18: Raststufe, erste
- 19: Raststufe, zweite
- 20: Kraftspeicher
- 21: Grundkörper, von 14
- 22: Steuernase
- 23: Steuerkulisse
- 24: Schenkel, an 22
- 25: Schenkel, an 22
- 26: Dreieckseite, an 22
- 27: Doppelpfeil
- 28a: Steuerfläche, linear
- 28b: Steuerfläche, geneigt wie 25
- 28c: Steuerfläche, linear
- 28d: Steuerfläche, geneigt wie 25
- 28e: Steuerfläche, linear
- 28f: Steuerfläche, geneigt wie 25
- 28g: Steuerfläche, linear
- 28h: Steuerfläche, geneigt wie 24
- 28i: Steuerfläche, linear
- 29a: Steuerfläche, linear
- 29b: Steuerfläche, geneigt wie 24
- 29c: Steuerfläche, linear
- 29d: Steuerfläche, geneigt wie 24
- 30: Pfeil
- 30': Pfeil
- 31: Winkelvorsprung
- 32: Anschlagplatte
- 33: Vorsprung, an 32
- 34: Unterseite, an 33
- 35: Ausnehmung

## Patentansprüche

1. Befestigungsvorrichtung für einen Kindersitz auf einem Fahrzeugsitz mit wenigstens einem am Fahrzeugsitz festgelegten Halteelement, welches ein in eine Gebrauchsstellung einerseits und in eine Nichtgebrauchsstellung bzw. Parkstellung andererseits überführbares Befestigungselement haltert,
**dadurch gekennzeichnet,**
**dass** das Befestigungselement (14) zusammen mit dem Halteelement (13) über eine Rastmechanik (17) verbunden ist, mit der das Befestigungselement (14) in eine Parkstellung versenkbar und in eine Gebrauchsstellung rückführbar ist.

2. Befestigungsvorrichtung nach Anspruch 1, **dadurch gekennzeichnet, dass** das Befestigungselement (14) unter die Oberkante des Sitzteiles (10) versenkbar und in die Gebrauchsstellung über die Oberkante des Sitzteiles (10) rückführbar ist.

3. Befestigungsvorrichtung nach Anspruch 1 oder 2, **dadurch gekennzeichnet, dass** die Rastmechanik (17) zwischen Befestigungselement (14) und Halteelement (13) als Zwei-Stufen-Mechanik ausgebildet ist, durch deren erste Raststufe (18) das Befestigungselement (14) in die Parkstellung und durch deren zweite Raststufe (19) das Befestigungselement (14) in die Gebrauchsstellung überführbar ist.

4. Befestigungsvorrichtung nach Anspruch 3, **dadurch gekennzeichnet, dass** das aus einem in Richtung auf die Gebrauchsstellung durch einen Kraftspeicher (20) belasteten Grundkörper (21) mit einem daran festgelegten Bügel (15) bestehende Befestigungselement (14) mit einer Steuernase (22) linear verschiebbar in eine Steuerkulisse (23) des quer zum Befestigungselement (14) verschiebbar am Sitzteil (10) gehalterten Halteelementes (13) eingreift.

5. Befestigungsvorrichtung nach Anspruch 4, **dadurch gekennzeichnet, dass** die vom Grundkörper (21) des Befestigungselementes (14) abragende Steuernase (22) einen Querschnitt in Form eines gleichschenkligen Dreiecks aufweist, dessen die Schenkel (24, 25) verbindende Dreiecksseite (26) in der linearen Bewegungsrichtung des Befestigungselementes (14) verläuft.

6. Befestigungsvorrichtung nach Anspruch 5, **dadurch gekennzeichnet, dass** die die Steuernase (22) aufnehmende Steuerkulisse (23) aus einer Führungsbahn gebildet ist, deren äußere Steuerflächen (28a, 28b, 28c, 28d, 28e, 28f, 28g, 28h, 28i) und auch die durch einen Winkelvorsprung (31) gebildeten inneren Steuerflächen (29a, 29b, 29c, 29d) abwechselnd linear und parallel zur Dreieckseite (26) sowie im Sinne der Schenkel (24, 25) der Steuernase (22) geneigt verlaufen.

7. Befestigungsvorrichtung nach Anspruch 6, **dadurch gekennzeichnet, dass** die den Raststufen (18, 19) zugekehrte Steuerfläche (29d) des Winkelvorsprungs (31) die beiden gleichsinnig geneigten Steuerflächen (28f, 28d) der Raststufen (18, 19) bereichsweise übergreift, aber gegensinnig zu den Steuerflächen (28d, 28f) der Raststufen (18, 19) geneigt ist und durch eine in Bewegungsrichtung der Steuernase (22) lineare Steuerfläche (29c) in Ausrichtung auf die geneigte Steuerfläche (28d) der zweiten Raststufe (19) begrenzt ist.

8. Befestigungsvorrichtung nach einem der vorhergehenden Ansprüche, **dadurch gekennzeichnet, dass** der Abstand zwischen den äußeren und inneren Steuerflächen der Steuerkulisse (23) für den Durchgang der Steuernase (22) bemessen ist.

9. Befestigungsvorrichtung nach Anspruch I, **dadurch gekennzeichnet, dass** das Befestigungselement (14) am Halteelement (13) in einer senkrecht zur Sitzfläche verlaufenden Ebene schwenkbar gelagert und durch die Rastmechanik in eine aufragende Gebrauchslage oder in eine an die Oberfläche des Sitzteiles (10) anklappbare Parklage überführbar ist.

10. Befestigungsvorrichtung nach Anspruch 8, **dadurch gekennzeichnet, dass** die Oberfläche des Sitzteiles (10) eine Ausnehmung (35) zur Aufnahme eines Bügels (15) des Befestigungselementes (14) aufweist.

## Claims

1. A fastening device for fastening a child's seat to the seat of a vehicle, the device having at least one retaining element attached to the vehicle seat, this element holding a fastening element, which may be moved into a service position on the one hand and an out-of-service or parking position on the other,
**characterised in that**
the fastening element (14) is connected together with the retaining element (13) by a latching mechanism (17), by means of which the fastening element (14) may be lowered into a parking position and returned into a service position.

2. A fastening device according to claim 1, **characterised in that** the fastening element (14) may be lowered below the top edge of the seat part (10) and returned to the service position above the top edge of the seat part (10).

3. A fastening device according to claim 1 or claim 2, **characterised in that** the latching mechanism (17) between fastening element (14) and retaining element (13) takes the form of a two-stage mechanism, by means of the first latching stage (18) of which the fastening element (14) may be moved into the parking position and by means of the second latching stage (19) of which the fastening element (14) may be moved into the service position.

4. A fastening device according to claim 3, **characterised in that** the fastening element (14), which consists of a base body (21) loaded by an energy storage mechanism (20) in the direction of the service position and which has a yoke (15) attached thereto, has a control tappet (22) which engages in linearly displaceable manner in a control slideway (23) of the retaining element (13) held on the seat part (10) so as to be displaceable transversely of the fastening element (14).

5. A fastening device according to claim 4, **characterised in that** the control tappet (22) projecting from the base body (21) of the fastening element (14) has a cross section in the form of an isosceles triangle, of which the base (26) connecting the lateral sides (24, 25) extends in the direction of linear movement of the fastening element (14).

6. A fastening device according to claim 5, **characterised in that** the control slideway (23) accommodating the control tappet (22) is formed by a guideway whose outer control surfaces (28a, 28b, 28c, 28d, 28e, 28f, 28g, 28h, 28i) and also the inner control surfaces (29a, 29b, 29c, 29d) formed by an angled projection (31) extend alternately in linear manner parallel to the base (26) of the triangle and obliquely in the direction of the lateral sides (24, 25) of the control tappet (22) .

7. A fastening device according to claim 6, **characterised in that** the control surface (29d) of the angled projection (31) facing the latching stages (18, 19) extends in part over the two control surfaces (28f, 28d), inclined in the same direction, of the latching stages (18, 19), but is inclined in the opposite direction from the control surfaces (28d, 28f) of the latching stages (18, 19) and is delimited by a linear control surface (29c), which extends in the direction of motion of the control tappet (22) and is directed towards the inclined control surface (28d) of the second latching stage (19) .

8. A fastening device according to one of the preceding claims, **characterised in that** the distance between the outer and inner control surfaces of the control slideway (23) is dimensioned for passage of the control tappet (22).

9. A fastening device according to claim 1, **characterised in that** the fastening element (14) is mounted swivellably on the retaining element (13) in a plane perpendicular to the surface of the seat and may be moved by the latching mechanism into an upward-projecting service position or into a parking position foldable against the surface of the seat part (10).

10. A fastening device according to claim 8, **characterised in that** the surface of the seat part (10) comprises a recess (35) to hold a yoke (15) of the fastening element (14).

## Revendications

1. Dispositif de fixation pour un siège d'enfant sur un siège de véhicule, comportant au moins un élément de maintien fixé sur le siège de véhicule, maintenant un élément de fixation susceptible d'être passé à sa position d'utilisation, d'une part, et à sa position de non utilisation ou position de stationnement, d'autre part,
**caractérisé en ce que**
l'élément de fixation (14) est relié conjointement à l'élément de maintien (13) par l'intermédiaire d'un mécanisme d'encliquetage (17), à l'aide duquel l'élément de fixation (14) peut être escamoté à une position de stationnement et être ramené en une position d'utilisation.

2. Dispositif de fixation selon la revendication 1, **caractérisé en ce que** l'élément de fixation (14) est susceptible d'être escamoté sous le bord supérieur de la partie d'assise (10) et est susceptible d'être ramené à la position d'utilisation, en passant sur le bord supérieur de la partie d'assise (10).

3. Dispositif de fixation selon la revendication 1 ou 2, **caractérisé en ce que** le mécanisme d'encliquetage (17), prévu entre l'élément de fixation (14) et l'élément de maintien (13), est réalisé sous la forme de mécanisme à deux étages, au moyen du premier étage d'encliquetage (18) duquel l'élément de fixation (14) peut être passé à la position de stationnement, et au moyen du deuxième étage d'encliquetage (19) duquel l'élément de fixation (14) peut être passé à la position d'utilisation.

4. Dispositif de fixation selon la revendication 3, **caractérisé en ce que** l'élément de fixation (14), formé d'un corps de base (21), chargé dans la direction de la position d'utilisation par un ressort accumulateur (20) et comportant une anse (15) fixée sur lui, s'engage par un ergot de commande (22), d'une façon permettant un déplacement linéaire, dans une coulisse de commande (23) de l'élément de maintien (13) maintenu sur la partie de siège (10), de façon déplaçable transversalement par rapport à l'élément de fixation (14).

5. Dispositif de fixation selon la revendication 4, **caractérisé en ce que** l'ergot de commande (22), en saillie du corps de base (21) de l'élément de fixation (14), présente une section transversale ayant la forme d'un triangle isocèle, dont le côté de triangle (26), reliant les branches (24, 25), s'étend dans la direction de déplacement linéaire de l'élément de fixation (14).

6. Dispositif de fixation selon la revendication 5, **caractérisé en ce que** la coulisse de commande (23), recevant l'ergot de commande (22), est formée d'une piste de guidage dont les faces de commande extérieures (28a, 28b, 28c, 28d, 28e, 28f, 28g, 28h, 28i) et, également, les faces intérieures (29a, 29b, 29c, 29d), formées par une saillie angulaires (31), s'étendent alternativement de façon linéaire et parallèlement au côté de triangle (26), ainsi qu'inclinées dans le sens des branches (24, 25) de l'ergot de commande (22).

7. Dispositif de fixation selon la revendication 6, **caractérisé en ce que** la face de commande (29d), tournée vers les étages d'encliquetage (18, 19), de la saillie angulaire (31) saisit par le dessus les deux faces de commande (28f, 28d) inclinées en sens inverse des étages d'encliquetage (18, 19), mais est inclinée en sens inverse des faces de commande (28d, 28f) des étages d'encliquetage (18, 19) et est limitée par une face de commande (29c), linéaire dans la direction de déplacement de l'ergot de commande (22), dans l'orientation de la face de commande (28d) inclinée du deuxième étage d'encliquetage (19).

8. Dispositif de fixation selon l'une des revendications précédentes, **caractérisé en ce que** l'espacement entre les faces de commande extérieures et intérieures de la coulisse de commande (23) est de valeur permettant le passage de l'ergot de commande (22).

9. Dispositif de fixation selon la revendication 1, **caractérisé en ce que** l'élément de fixation (14) est monté à pivotement dans un plan s'étendant perpendiculairement à la face d'assise, sur l'élément de maintien (13), et est susceptible d'être passé, au moyen du mécanisme d'encliquetage, en une position d'utilisation en saillie vers le haut ou en une position de stationnement pouvant être rabattue sur la face supérieure de la partie d'assise (10).

10. Dispositif de fixation selon la revendication 8, **caractérisé en ce que** la face supérieure de la partie d'assise (10) présente un évidement (35) permettant de recevoir une anse (15) de l'élément de fixation (14).
